Europäisches Patentamt

European Patent Office

Office européen des brevets

(11) Veröffentlichungsnummer: **0 280 904**
**A1**

## (12) EUROPÄISCHE PATENTANMELDUNG

(21) Anmeldenummer: **88101606.7**

(22) Anmeldetag: **04.02.88**

(51) Int. Cl.⁴: **F16F 9/48** , F16F 9/08

(30) Priorität: **02.03.87 DE 3706738**

(43) Veröffentlichungstag der Anmeldung:
**07.09.88 Patentblatt 88/36**

(84) Benannte Vertragsstaaten:
**AT CH DE FR GB IT LI**

(71) Anmelder: **AROS Hydraulik GmBH**
**Föhrenweg 7**
**D-8940 Memmingen(DE)**

(72) Erfinder: **Leben, Klaus**
**Max-Reger-Strasse 67**
**D-8137 Berg 1(DE)**

(74) Vertreter: **Patentanwälte Dr. Solf & Zapf**
**Zeppelinstrasse 53**
**D-8000 München 80(DE)**

(54) **Hydraulischer Stoss -und Schwingungsdämpfer.**

(57) Die Erfindung betrifft einen hydraulischen Stoß- und Schwingungsdämpfer mit einem einseitig geschlossenen Zylinder, in dem abgedichtet ein Kolben mit einer hohlen Kolbenstange verschiebbar ist, wobei im Zylinderraum als Steuerelement ein offenes Rohr angeordnet ist, das in Rohrlängsrichtung Überströmöffnungen in der Rohrwandung aufweist und in der Kolbenstange gleitbar gelagert ist und wobei ein Fluidraum im Zylinder und ein Gasraum vorgesehen sind, gekennzeichnet durch ein zylindrisches, den Zylinder (10) mit Abstand umfassendes Rohr (3), das an einem Ende mit einem Flanschdeckel (2) geschlossen ist, der vorzugsweise auch den Zylinder (10) abdichtet, wobei in das andere Ende des Rohres (3) ein ringförmiges Verschlußstück (4) eingesetzt ist, das eine zentrale Bohrung (5) aufweist, die formschlüssig von der zylinderförmigen, in der Bohrung (5) gleitbar gelagerten Kolbenstange (6) durchgriffen wird, und wobei der Zylinderringraum (15) zwischen dem Zylinder (10) und dem Rohr (3) in einen Gasraum (15a) und einen Fluidraum (15b) unterteilt ist und Öffnungen zwischen dem Zylinderraum (11) und dem Fluidraum (15b) vorgesehen sind.

FIG.1

## Hydraulischer Stoß-und Schwingungsdämpfer

Die Erfindung betrifft einen Stoß-und Schwingungsdämpfer gemäß dem Oberbegriff des Anspruchs 1.

Ein solcher Dämpfer wird in der DE-OS 35 01 552 beschrieben. Dieser bekannte Dämpfer hat sich sehr gut bewährt. Er verfügt über einen ventilartig wirkenden Gleitring, der zentral und axial verschiebbar in einem Bohrungsbereich des Kolbens lagert, wobei ein Sprengring und eine Bohrungsstufe die Bewegung des Gleitrings begrenzen.

Aus der DE-OS 31 20 016 ist ein dem Gleitring des Gegenstands der DE-OS 35 01 552 entsprechender, mit dem Kolben zusammenwirkender Ventilteller vorgesehen, dessen axiale Bewegung ebenfalls durch Widerlager begrenzt ist. Der Ventilteller ist aber federbelastet, so daß er sich erst nach Einwirkung einer vorbestimmten Kraft verschiebt. Diese Ausführungsform des Ventiltellers ermöglicht ein Einfahren des Kolbens mit geringer Geschwindigkeit, ohne daß beachtliche Dämpfungskräfte entstehen.

Aufgabe der Erfindung ist, den aus der DE-OS 35 01 552 bekannten Stoß-und Schwingungsdämpfer platzsparender und so auszuführen, daß die Dämpfungswirkung erst bei verhältnismäßig hohen Geschwindigkeiten der Kolbenbewegung eintritt.

Diese Aufgabe wird durch die Merkmale des Anspruchs 1 gelöst. Vorteilhafte Weiterbildungen der Erfindung werden in den Unteransprüchen gekennzeichnet. Anhand der Zeichnung wird im folgenden die Erfindung beispielhaft näher erläutert. Es zeigen:

Fig. 1 einen Längsschnitt durch den Dämpfer mit Ventilteller in Schließstellung und ausgefahrenem Kolben,

Fig. 2 einen Längsschnitt durch den Dämpfer mit Ventilteller in Offenstellung und ausgefahrenem Kolben,

Fig. 3 einen Längsschnitt durch den Dämpfer mit Ventilteller in Offenstellung und eingefahrenem Kolben,

Fig. 4 einen Längsschnitt durch eine besondere Ausführungsform des Dämpfers,

Fig. 5 die Einzelheit X aus Fig. 4.

Der hydraulische Stoß-und Schwingungsdämpfer 1 weist eine zylindrisches Rohr 3 auf, das an einem Ende mit einem Flanschdeckel 2 geschlossen ist. In das andere Ende des Rohrs 3 ist ein ringförmiges Verschlußstück 4 eingesetzt, das eine zentrale Bohrung 5 aufweist. Die Bohrung 5 wird formschlüssig von einer zylinderförmigen Kolbenstange 6 durchgriffen, an deren im Rohr 3 befindlichen Ende ein Kolbenkopfringsteg 7 angeordnet ist. Die Mantelfläche 8 des Kolbenkopfes 7 lagert formschlüssig an der Zylinderwandung 9 eines im Rohr 3 axial angeordneten Zylinders 10. Der Zylinder 10 stützt sich am Verschlußstück 4 und am Flanschdeckel 2 ab. Der Durchmesser des Zylinderinnenraums 11 ist etwas größer als der Durchmesser der Bohrung 5 im Verschlußstück 4, woraus eine Ringstufe 12 resultiert, die als ein Anschlag für den Kolbenkopf 7 wirkt. Zwischen der Außenmantelfläche 13 des Zylinders 10 und der Innenmantelfläche 14 des Rohres 3 ist ein Zylinderringspalt 15 vorgesehen.

Im flanschseitigen Ende des Zylinders 10 steckt formschlüssig ein Sockel 16, in dem axial ein Rohrstück 17 sitzt. Das Rohrstück 17 erstreckt sich bis in den Innenraum 18 der Kolbenstange 6 und greift dort form schlüssig, gegebenenfalls über eine Buchse 19, gleitbar ein. Zwischen dem Rohrstück 17 und der Innenwandung 9 des Zylinders 10 befindet sich der Zylinderringraum 11. Das Rohrstück 17 weist mehrere Löcher 18a im Mantel auf. Über dem Sockel 16 ist ein Ventilring 20 angeordnet, der sich gegen die Innenwandung 9 des Zylinders 10 abstützt und über das Rohrstück 17 einen Ringspalt 21 freilassend gestülpt ist. Mit mindestens einer Feder 22 stützt sich der Ventilring 20 gegen den Sockel 16 ab, so daß bei unbelastetem Dämpfer der Ventilring 20 über dem Sockel 16 schwebt. In den Sockel 16 sind axial ausgerichtete Bohrungen 23 eingebracht, die in radiale Bohrungen 24 münden, die durch die Wandung des Zylinders 10 gehen. Des weiteren sind radiale Bohrungen 25 im Sockel 16 angeordnet, die einerseits ebenfalls die Wandung des Zylinders 10 durchdringen und andererseits in einem zentralen Raum 26 im Sockel 16 münden, der in den Innenraum 27 des Rohrstücks 17 übergeht.

Beginnend am Verschlußstück 4 ist auf der Innenwandung 14 des Rohres 3 ein Formschlauch 28 aus einem elastischen Material gasdicht angeordnet, der etwa in der Mitte des Rohres 3 beginnend sich verjüngt und sich bis zum Sockel 16 erstreckt, wo er auf der Außenmantelfläche 13 des Zylinders 10 gasdicht befestigt ist. Dabei läßt der Schlauch 28 die Bohrungen 24 und 25 frei. Der Schlauch 28 teilt den Ringraum 15 in den Gasraum 15a und den Fluidraum 15b. Der Schlauch 28 kann auch zylindrisch sein.

Ringdichtungen 29 sind überall dort vorgesehen, wo eine Abdichtung gegenüber dem Außenraum des Dämpfers erforderlich ist. Außerhalb des Rohres 3 befindet sich am Ende der Kolbenstange 6 ein Stangenkopf 30, der den Innenraum 18 der Kolbenstange 6 abschließt.

Im Gasraum 15a befindet sich ein Gas und im Fluidraum 15b z.B. eine Paste gemäß dem Gegenstand der DE-OS 32 07 654.

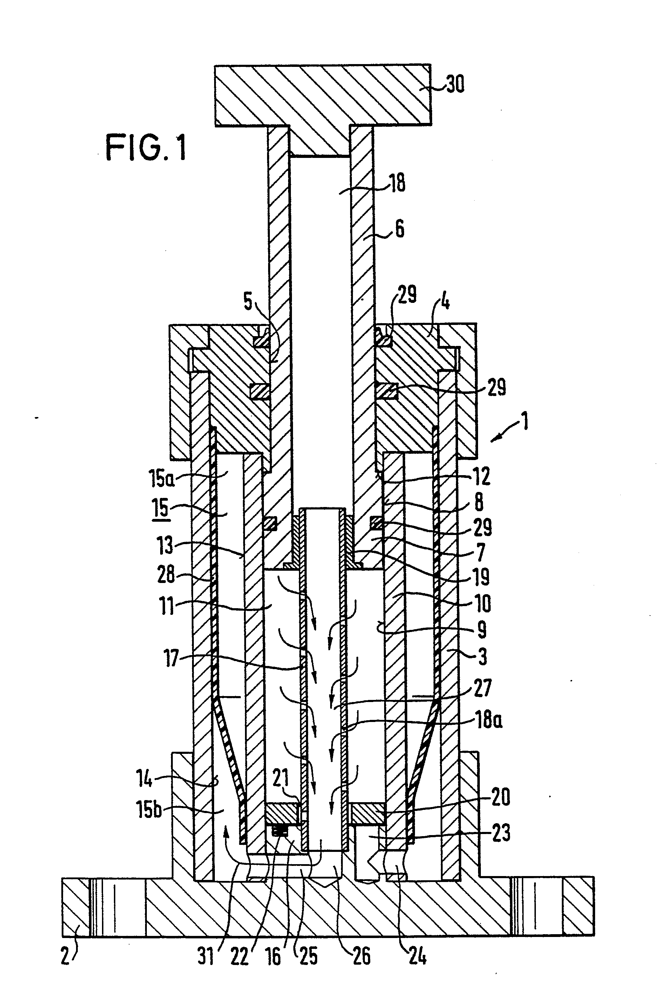

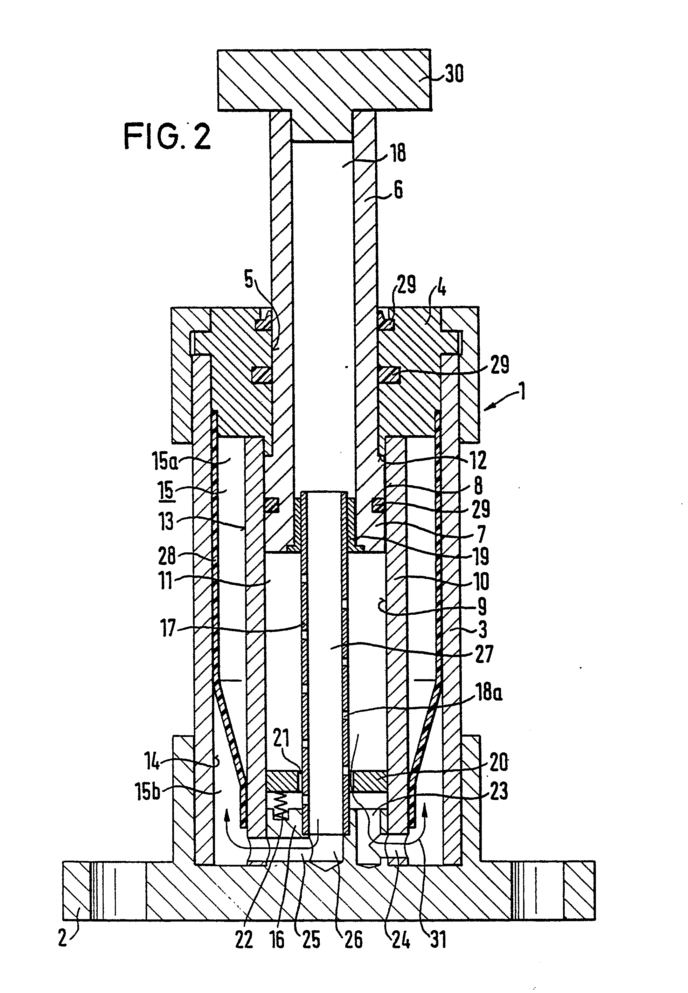

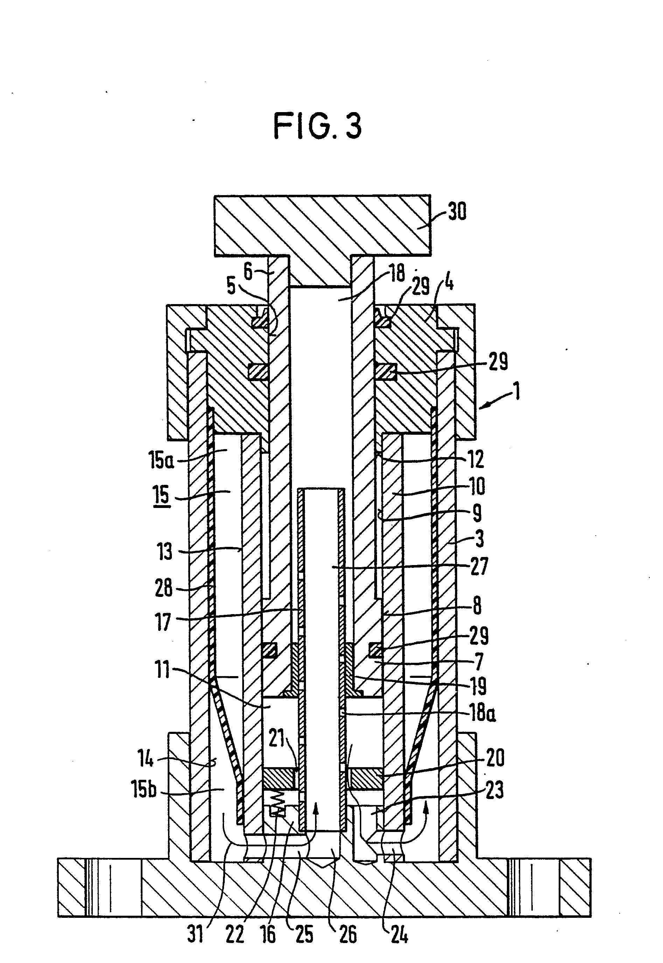

Die Wirkungsweise des erfindungsgemäßen Stoß- und Schwingungsdämpfers ergibt aus den Pfeilen 31 in den Fig. 1 bis 3, die die Fließrichtung der Paste anzeigen. Fig. 1 verdeutlicht den Dämpfungsfall. Der Ventilring 20 verschließt die Bohrungen 23. Die Paste findet einen Weg lediglich durch die Löcher 18a und die Bohrungen 25 in den Fluidraum 15b. Fig. 2 zeigt den Fall, bei dem ein Einfahren des Kolbens ohne Dämpfungswirkung erfolgt. Die Paste dringt durch den Ringspalt 21 in den Raum unterhalb des Ventilrings 20 und von dort über die Bohrungen 23 und 24 sowie aus dem Innenraum 27 durch die Bohrungen 25 in den Fluidraum 15b. Fig. 3 gibt den Weg der Paste bei der Entlastung des Dämpfers an.

Der erfindungsgemäße Stoß- und Schwingungsdämpfer eignet sich insbesondere für Anwendungen, die langhubige Stoßdämpfer erfordern, wie sie bei Hochregallagern und großen Krananlagen eingesetzt werden müssen. Beispielsweise fährt bei einem Hochregallager das Regalbediengerät, das auf Schienen geführt wird, mit verhältnismäßig hoher Geschwindigkeit (etwa 1,5 bis 3 m/sec.) und muß aus Sicherheitsgründen an den Gassenenden von einem Stoßdämpfer bei Ausfall der elektrischen Steuerung aufgefangen werden. Der Dämpfungshub beträgt durchschnittlich 250 bis 700 mm oder mehr, was bei zwei Dämpfern eine Palettenbreite, also eine Regalfachbreite, ausmacht. Man ist dazu übergegangen, die elektrische Steuerung so vorzunehmen, daß das am Ende der Gasse bzw. des Regals angeordnete Fach im Kriechgang angefahren werden kann.

Das bedeutet, daß keine kinetische Energie aufgebaut wird und die Puffersicherung für diesen Fall nicht erforderlich ist. Die Kolbenstange des Dämpfers muß langsam eingedrückt werden können. Der erfindungsgemäße Dämpfer gewährleistet diese Forderung optimal.

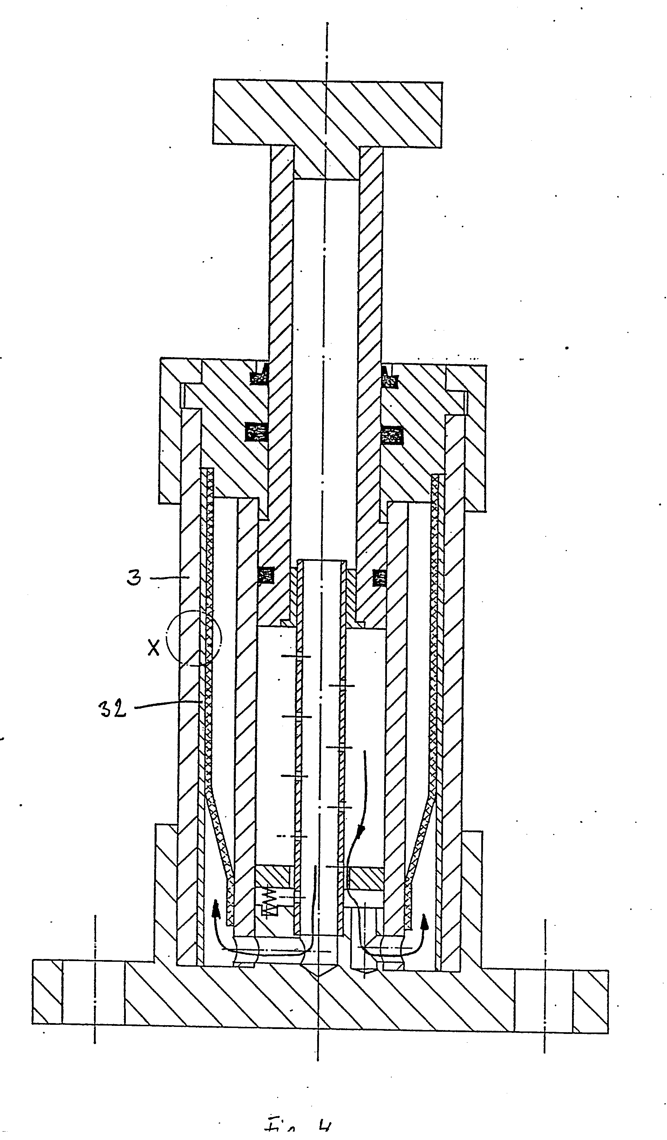

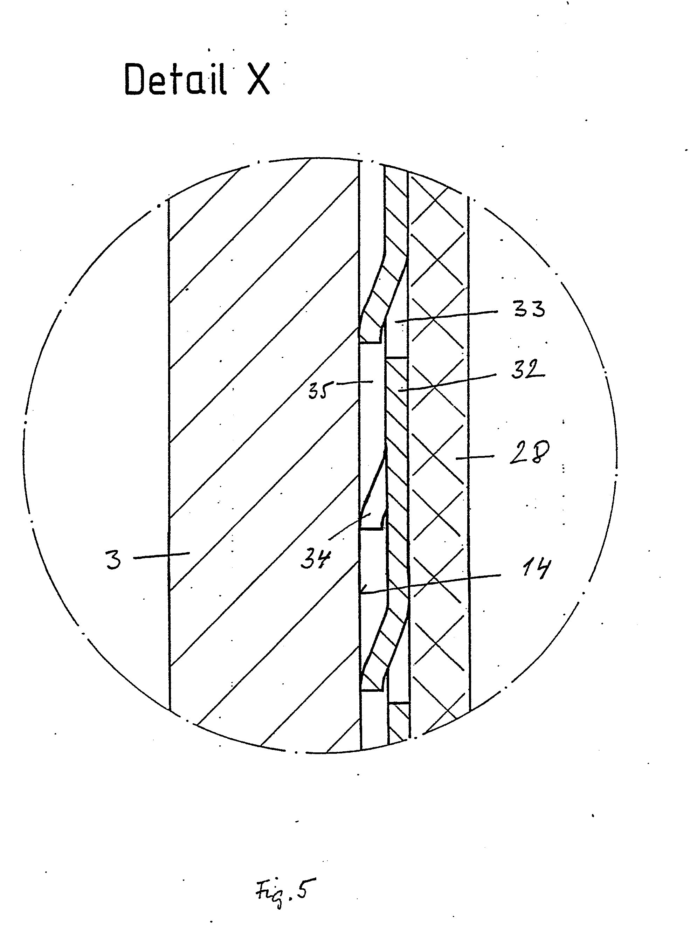

In Fig. 4 wird eine besondere Ausführungsform des erfindungsgemäßen hydraulischen Stoß- und Schwingungsdämpfers dargestellt, die im wesentlichen ebenso aufgebaut ist wie die Ausführungsform gemäß den Fig. 1 bis 3. Der Kolben ist ausgefahren. Der Ventilteller befindet sich in der Offenstellung. Im Unterschied zur Ausführungsform gemäß den Fig. 1 bis 3 ist auf der Innenwandung 14 des Rohres 3 ein gelochtes Zwischenblech 32 angeordnet. Die Ausbildung des Zwischenblechs 32, das sich vorzugsweise über den gesamten Innenmantel des Rohres 3 erstreckt, ist aus der in Fig. 5 dargestellten Einzelheit X zu erkennen. Das Zwischenblech 32 weist Löcher 33 auf. Die Löcher 33 sind nach Art einer Reibelochung ausgebildet und zueinander seitlich nach oben und/oder unten versetzt angeordnet. Die Löcher 33 werden durch Einschnitte und Herausdrücken des eingeschnittenen Materials nach außen in Richtung Innenwandung 14 hergestellt, so daß herausgedrückte Lappen 34 sich gegen die Innenwandung 14 abstützen. Aus dieser Abstützung resultiert ein Zwischenraum 35 zwischen dem Zwischenblech 32 und der Innenmantelfläche 14. Das Dämpfungsmedium kann somit durch die Löcher 33 und durch den Zwischenraum 35 fließen, so daß die Gefahr einer Einkammerung von Dämpfungsmedium zwischen dem Schlauch 28 und der Innenmantelfläche 14 vermieden wird.

Die Reibelochung ergibt sich aus einem geraden Einschnitt und einem sickenartigen Herausdrücken des Blechmaterials neben dem Einschnitt, so daß ein Gewölbe entsteht, das einschnittseitig offen ist. Diese Ausgestaltung der Lochung begünstigt das Fließen der Flüssigkeit, insbesondere wenn die Öffnungen der durch die Wölbung entstandenen Vertiefungen in Fließrichtung der Flüssigkeit angeordnet sind. Die Anzahl und Größe der Löcher sowie der Höhe der Gewölbe und die Dicke des Blechs werden empirisch ermittelt und jeweils auf die Art des Fluids abgestimmt.

**Ansprüche**

1. Hydraulischer Stoß- und Schwingungsdämpfer mit einem einseitig geschlossenen Zylinder, in dem abgedichtet ein Kolben mit einer hohlen Kolbenstange verschiebbar ist, wobei im Zylinderraum als Steuerelement ein offenes Rohr angeordnet ist, das in Rohrlängsrichtung Überströmöffnungen in der Rohrwandung aufweist und in der Kolbenstange gleitbar gelagert ist und wobei ein Fluidraum im Zylinder und ein Gasraum vorgesehen sind, **gekennzeichnet durch** ein zylindrisches, den Zylinder (10) mit Abstand umfassendes Rohr (3), das an einem Ende mit einem Flanschdeckel (2) geschlossen ist, der vorzugsweise auch den Zylinder (10) abdichtet, wobei in das andere Ende des Rohres (3) ein ringförmiges Verschlußstück (4) eingesetzt ist, das eine zentrale Bohrung (5) aufweist, die formschlüssig von der zylinderförmigen, in der Bohrung (5) gleitbar gelagerten Kolbenstange (6) durchgriffen wird, und wobei der Zylinderringraum (15) zwischen dem Zylinder (10) und dem Rohr (3) in einen Gasraum (15a) und einen Fluidraum (15b) unterteilt ist und Öffnungen zwischen dem Zylinderraum (11) und dem Fluidraum (15b) vorgesehen sind.

2. Hydraulischer Stoß- und Schwingungsdämpfer nach Anspruch 1, **dadurch gekennzeichnet,** daß die zylinderförmige Kolbenstange (6) einen Kolbenkopfringsteg (7) aufweist, dessen Mantelfläche formschlüssig an der Zylinderwandung (9) des Zylinders (10) lagert.

3. Hydraulischer Stoß-und Schwingungsdämpfer nach Anspruch 1 und/oder 2, **dadurch gekennzeichnet,** daß der Zylinder (10) sich am Verschlußstück (4) und am Flanschdeckel (2) abstützt.

4. Hydraulischer Stoß-und Schwingungsdämpfer nach einem oder mehreren der Ansprüche 1 bis 3, **dadurch gekennzeichnet,** daß der Durchmesser des Zylinderinnenraums (11) etwas größer ist als der Durchmesser der Bohrung (5) im Verschlußstück (4), woraus eine Ringstufe (12) resultiert, die als Anschlag für den Kolbenkopf (7) dient.

5. Hydraulischer Stoß-und Schwingungsdämpfer nach einem oder mehreren der Ansprüche 1 bis 4, **dadurch gekennzeichnet,** daß zwischen der Außenmantelfläche (13) des Zylinders (10) und der Innenmantelfläche (14) des Rohres (3) ein Zylinderringspalt (15) vorgesehen ist.

6. Hydraulischer Stoß-und Schwingungsdämpfer nach einem oder mehreren der Ansprüche 1 bis 5, **dadurch gekennzeichnet,** daß im flanschseitigen Ende des Zylinders (10) formschlüssig ein Sockel (16) steckt, in dem axial das Rohrstück (17) sitzt, das sich bis in den Innenraum (18) der Kolbenstange (6) erstreckt und dort formschlüssig, gegebenenfalls über eine Buchse (19), gleitbar eingreift.

7. Hydraulischer Stoß-und Schwingungsdämpfer nach einem oder mehreren der Ansprüche 1 bis 6, **dadurch gekennzeichnet,** daß zwischen dem Rohrstück (17) und der Innenwandung (9) des Zylinders (10) sich ein Zylinderringraum (11) befindet, das Rohrstück (17) mehrere Löcher (18a) im Mantel aufweist und über dem Sockel (16) ein Ventilring (20) angeordnet ist, der sich gegen die Innenwandung (9) des Zylinders (10) abstützt und über das Rohrstück (17) einen Ringspalt (21) freilassend gestülpt ist.

8. Hydraulischer Stoß-und Schwingungsdämpfer nach Anspruch 7, **dadurch gekennzeichnet,** daß sich der Ventilring (20) mit mindestens einer Feder (22) gegen den Sockel (16) abstützt, so daß bei unbelastetem Dämpfer der Ventilring (20) über dem Sockel (16) schwebt, wobei in den Sockel (16) axial ausgerichtete Bohrungen (23) eingebracht sind, die in radiale Bohrungen (24) münden, die durch die Wandung des Zylinders (10) gehen und wobei des weiteren radiale Bohrungen (25) im Sockel (16) angeordnet sind, die einerseits ebenfalls die Wandung des Zylinders (10) durchdringen und andererseits in einem zentralen Raum (26) im Sockel (16) münden, der in den Innenraum (27) des Rohrstücks (17) übergeht.

9. Hydraulischer Stoß-und Schwingungsdämpfer nach einem oder mehreren der Ansprüche 1 bis 8, **dadurch gekennzeichnet,** daß beginnend am Verschlußstück (4) auf der Innenwandung (14) des Rohres (3) ein Schlauch (28) aus einem elastischen Material gasdicht angeordnet ist, der etwa in der Mitte des Rohres (3) beginnend sich verjüngt und sich bis zum Sockel (16) erstreckt, wo er auf der Außenmantelfläche (13) des Zylinders (10) gasdicht befestigt ist und die Bohrungen (24 und 25) freiläßt.

10. Hydraulischer Stoß-und Schwingungsdämpfer nach einem oder mehreren der Ansprüche 1 bis 9, **dadurch gekennzeichnet,** daß sich außerhalb des Rohres (3) am Ende der Kolbenstange (6) ein Stangenkopf (30) befindet, der den Innenraum (18) der Kolbenstange (6) abschließt.

11. Hydraulischer Stoß-und Schwingungsdämpfer nach einem oder mehreren der Ansprüche 1 bis 10, **dadurch gekennzeichnet,** daß sich im Gasraum (15a) ein Gas und im Fluidraum (15b) eine Paste gemäß dem Gegenstand der DE-OS 32 07 654 befindet.

12. Hydraulischer Stoß-und Schwingungsdämpfer nach einem oder mehreren der Ansprüche 1 bis 11, **dadurch gekennzeichnet,** daß die Außenfläche des Schlauchs (28) von der Innenmantelfläche (14) auf Abstand gehalten wird.

13. Hydraulischer Stoß-und Schwingungsdämpfer nach Anspruch 12, **dadurch gekennzeichnet,** daß der Abstand durch Abstandhalter bewirkt wird, die den Schlauch (28) gegen die Innenmantelfläche (14) abstützen und Strömungskanäle im Zwischenraum zwischen der Innenmantelfläche (14) und der Außenfläche des Schlauchs (28) für die Flüssigkeit bilden.

14. Hydraulischer Stoß-und Schwingungsdämpfer nach Anspruch 12 und/oder 13, **gekennzeichnet durch** ein Zwischenblech (32) zur Abstützung des Schlauchs (28).

15. Hydraulischer Stoß-und Schwingungsdämpfer nach Anspruch 14, **dadurch gekennzeichnet,** daß das Zwischenblech Löcher (33) und aus der Blechebene herausragende Abstandhalterstützen (34) aufweist, die das Zwischenblech (32) von der Innenmantelfläche (14) auf Abstand halten.

16. Hydraulischer Stoß-und Schwingungsdämpfer nach Anspruch 15, **dadurch gekennzeichnet,** daß die Löcher (33) und Abstandhalterstützen (34) durch eine Reibelochung gebildet werden.

FIG.1

FIG. 2

# FIG. 3

0 280 904

Fig. 4

Detail X

3

35

34

33

32

28

14

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 021 698 (OLEO INTERNATIONAL HOLDINGS LTD) * Seite 11, Zeilen 9-14; Ansprüche 1-6; Figur 1 * | 1-6 | F 16 F 9/48 F 16 F 9/08 |
| | --- | | |
| A,D | DE-A-3 501 552 (AROS HYDRAULIK GmbH) * Insgesamt * | 1,10 | |
| | --- | | |
| A | EP-A-0 133 398 (CREUSOT-LOIRE) * Figur 1 * | 1-3,5,9 | |
| | --- | | |
| A | US-A-3 248 100 (SAFTIEN) * Figur * | 1,9,12-16 | |
| | --- | | |
| A | EP-A-0 030 455 (JONAS WOODHEAD LTD) * Seite 10, Zeilen 4-25; Figur 5 * | 1 | |
| | --- | | |
| A | DE-U-7 638 894 (HERMANN HEMSCHEIDT MASCHINENFABRIK) * Figur * | 6 | |
| | ----- | | |

RECHERCHIERTE SACHGEBIETE (Int. Cl.4)

F 16 F

Der vorliegende Recherchenbericht wurde für alle Patentansprüche erstellt

| Recherchenort | Abschlußdatum der Recherche | Prüfer |
|---|---|---|
| DEN HAAG | 25-05-1988 | MEIJS P.C.J. |

EPO FORM 1503 03.82 (P0403)